# EUROPEAN PATENT APPLICATION

(11) **EP 4 604 200 A1**
(43) Date of publication of application: **20.08.2025**
(21) Application number: 23877678.5
(22) Date of filing: 11.10.2023
(51) Int. Cl.: H01M 4/36, H01M 4/583, H01M 4/133, H01M 10/052, H01M 4/02

(54) **NEGATIVE ELECTRODE FOR LITHIUM SECONDARY BATTERY AND LITHIUM SECONDARY BATTERY COMPRISING SAME**

(30) Priority: 12.10.2022 KR 20220130602
(71) Applicant: Posco Future M Co., Ltd, Pohang-si, Gyeongsangbuk-do 37918 (KR)
(72) Inventor: SHIN, Myoungsoo, Pohang-si, Gyeongsangbuk-do 37918 (KR); LEE, Kyoungmuk, Pohang-si, Gyeongsangbuk-do 37918 (KR); LEE, Se Hyun, Pohang-si, Gyeongsangbuk-do 37918 (KR); MIN, Jin Wook, Pohang-si, Gyeongsangbuk-do 37918 (KR); KWON, Haejun, Pohang-si, Gyeongsangbuk-do 37918 (KR); LEE, Heon Young, Pohang-si, Gyeongsangbuk-do 37918 (KR); KIM, Wongi, Pohang-si, Gyeongsangbuk-do 37918 (KR); KANG, Su Hee, Pohang-si, Gyeongsangbuk-do 37918 (KR); JUNG, Su Yeon, Pohang-si, Gyeongsangbuk-do 37918 (KR); KIM, Sumin, Pohang-si, Gyeongsangbuk-do 37918 (KR)
(74) Representative: Meissner Bolte Partnerschaft mbB
(86) International application number: PCT/KR2023/015651
(87) International publication number: WO 2024/080755

(57) **Abstract**

The present invention relates to a negative electrode for a lithium rechargeable battery and a lithium rechargeable battery including the same, which comprises a negative electrode active material including a natural graphite and a coating layer disposed on a surface of the natural graphite, and an area ratio of the orientation peak intensity of the XRD pattern (I110/I004) is 0.08 to 0.16 at a compressed density of 1.40 g/cc to 1.80 g/cc. By using the negative electrode of the present invention in a lithium rechargeable battery, the charge/output characteristics of the lithium rechargeable battery can be improved.

## Description

### FIELD OF THE INVENTION

The present invention relates to a negative electrode for a lithium rechargeable battery and a lithium rechargeable battery including the same, and more specifically, to a negative electrode for a lithium rechargeable battery having high power characteristics and a lithium rechargeable battery including the same.

### DESCRIPTION OF THE RELATED ART

As technological development and demand for mobile devices increase, the demand for rechargeable batteries as an energy source is rapidly increasing, and recently, the use of rechargeable batteries as a power source for electric vehicles (xEV) and energy storage systems (ESS) is becoming a reality. Accordingly, much research is being conducted on rechargeable batteries that can meet various needs, and the demand for lithium rechargeable batteries with high power characteristics is increasing.

Particularly, lithium rechargeable batteries used in electric vehicles require high energy density and the ability to produce large output in a short period of time, and therefore require superbly excellent output characteristics compared to existing small lithium rechargeable batteries.

### SUMMARY OF THE INVENTION

One task of the present invention is to provide a negative electrode for a lithium rechargeable battery having high power characteristics.

Another object of the present invention is to provide a lithium rechargeable battery comprising a negative electrode for a lithium rechargeable battery having the aforementioned advantages.

To achieve the above-mentioned object, one embodiment of the present invention provides a negative electrode for a lithium rechargeable battery, which includes a negative electrode active material including natural graphite and a coating layer disposed on a surface of the graphite, and has an area ratio of the orientation peak intensity of the XRD pattern (I110/I004) is 0.08 to 0.16 at a compressed density of 1.40 g/cc to 1.80 g/cc.

The spheroidization degree of natural graphite can be greater than 0.80.

The natural graphite may be a respherical shaped natural graphite obtained through a primary spherical shaping process and a secondary respherical shaping process.

The tap density of natural graphite can be 0.8 to 1.2 g/cm³.

The average particle diameter D50 of natural graphite can be 6 to 20µm.

The coating layer may include a low-crystalline carbon material.

The low-crystalline carbon material can be petroleum pitch, coal pitch, mesophase pitch, heavy oil, light oil, polyvinyl alcohol (PVA), polyvinylchloride (PVC), sucrose, phenol resin, furan resin, furfuryl alcohol, polyacrylonitrile, cellulose, styrene, polyimide, epoxy resin, glucose or combination thereof.

The content of the low-crystalline carbon material can be 1 to 20 wt% with reference to the entire weight of the natural graphite.

The thickness of the coating layer can be 5 to 20 nm.

The spheroidization degree of the negative electrode active material can be greater than 0.8.

The specific surface area of the negative electrode active material can be 1.5 to 4.0 m²/g.

Another embodiment of the present invention provides a lithium rechargeable battery comprising a negative electrode for the aforementioned lithium rechargeable battery.

A negative electrode for a lithium rechargeable battery according to one embodiment of the present invention has a higher orientation index (I110/I004) than conventional negative electrodes in a specific range of compression densities, thereby exhibiting excellent output characteristics.

### BRIEF DESCRIPTION OF THE DRAWINGS

FIG. 1 is a schematic view of a negative electrode for a lithium rechargeable battery according to one embodiment of the present invention.
FIG. 2 shows the experimental results of evaluating the orientation peak intensity ratio (I110/I004) of XRD patterns of the negative electrode for a lithium rechargeable battery manufactured according to Embodiments 1 to 2 and Comparative Examples 1 to 2 at a compressed density of 1.40 g/cc and a compressed density of 1.80 g/cc.
FIG. 3 shows the results of a high-rate characteristic evaluation experiment of a lithium rechargeable battery manufactured according to embodiments 1 to 2 and comparative examples 1 to 2.

### DETAILED DESCRIPTION OF THE EMBODIMENTS

Hereinafter, referring to the drawings, an implementation example of the present invention will be described clearly and in detail so that a person of ordinary skill in the technical field to which the present invention belongs can easily implement it. However, this is provided as an example and the present invention is not limited thereby, and the present invention is only defined by the scope of the claims described below.

The terms or words used in this specification and claims should not be construed as limited to their usual or dictionary meanings, but should be interpreted as having meanings and concepts consistent with the technical idea of the present invention, based on the principle that an inventor can appropriately define the concept of a term to explain his or her own invention in the best way.

In this specification, expressions such as "comprising, including, containing, and having" should be understood as open-ended terms implying the possibility of including another embodiment.

In this specification, "preferable" or "preferably" refers to an embodiment of the present invention that can provide a predetermined advantage under certain circumstances. However, under the same or different circumstances, other embodiments may also be preferable. Additionally, the mention of one or more preferably embodiments does not imply that other embodiments are not useful, nor is it intended to exclude other embodiments from the scope of the present invention.

In this specification, the term "combination thereof(s)" described in a Markush format expression means one or more mixtures or combinations selected from the group consisting of components described in the Markush format expression, and means including one or more selected from the group consisting of the components.

In this specification, the description "A and/or B" means A or B or both.

In this specification, when a part such as a layer, membrane, region, or plate is said to be "on" or "above" another part, this includes not only the case where it is directly above the other part, but also the case where there is another part in between, and does not necessarily mean that it is positioned above with reference to the direction of gravity.

### 1. Negative electrode for lithium rechargeable battery

Below, a negative electrode for a lithium rechargeable battery according to an embodiment of the present invention is described in detail.

One embodiment of the present invention provides a negative electrode for a lithium rechargeable battery, comprising a negative electrode active material including natural graphite and a coating layer disposed on a surface of the graphite, wherein an area ratio of the orientation peak intensity of the XRD pattern (I110/I004) is 0.08 to 0.16 at a compressed density of 1.40 g/cc to 1.80 g/cc.

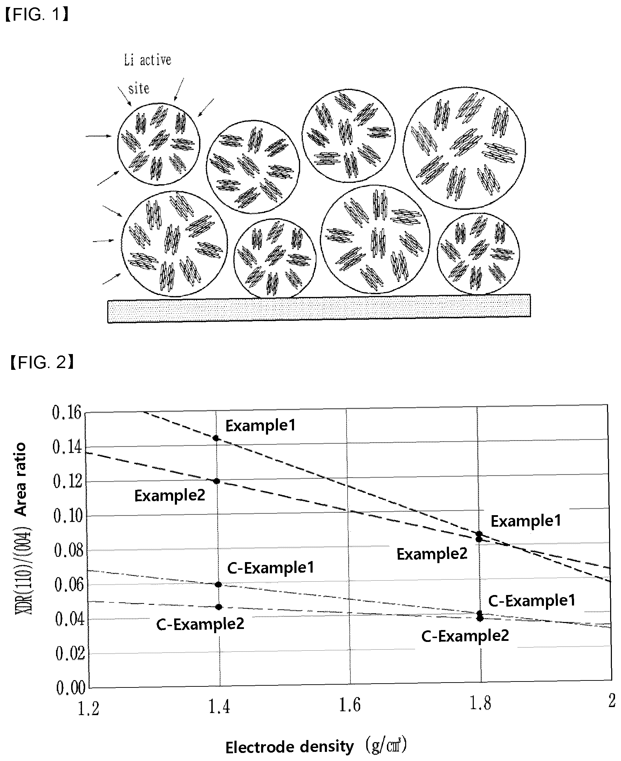

FIG. 1 is a schematic view of a negative electrode for a lithium rechargeable battery according to one embodiment of the present invention.

Referring to FIG. 1, it can be confirmed that the directionality of the edge portion of the graphite layer of the spherical shape graphite is oriented in various directions.

In other words, the negative electrode for a lithium rechargeable battery according to one embodiment of the present invention has an area ratio of orientation peak intensities (I110/I004) of 0.08 to 0.16 in an XRD pattern at a compressed density of 1.40 g/cc to 1.80 g/cc. More specifically, the orientation peak intensity area ratio (I110/I004) can be greater than or equal to 0.08, 0.081, 0.082 or 0.083, and less than or equal to 0.16, 0.15 or 0.145.

In this specification, the orientation peak intensity area ratio (I110/I004) means the ratio obtained by dividing the peak areas of the (110) plane and the (004) plane after measuring the (110) plane and the (004) plane of the graphite particle by XRD. Specifically, the (110) plane is 76.5 degrees < 2θ < 78.5 degrees, and the (004) plane is 53.5 degrees < 2θ < 56.0 degrees, and 2θ represents the diffraction angle. The orientation peak intensity area ratio can be used as a measure of the degree to which the edge portion of a natural graphite layer is oriented in various directions.

Natural graphite is useful as a negative electrode active material because it is inexpensive, has excellent voltage flatness, and exhibits high capacity close to theoretical capacity. However, when manufacturing an electrode using only natural graphite in the form of a highly crystalline plate, the active material is compressed flatly at a high density and the directionality of the edge portion of the graphite layer is limited, so the insertion and de-insertion of lithium ions cannot occur in various directions, which may result in deterioration of high-rate charging/discharging characteristics. Therefore, the graphite used in conventional batteries is manufactured by spherically shaping natural graphite through rotation-based processing so that the graphite edge portion can be oriented in various directions, and is used as a negative electrode active material. However, general natural graphite processing involves successive stages of crushing, shaping, clumping, and trimming of the flake-shaped natural graphite, so the shape is close to an oval, and then the degree of crystal orientation at the edge where lithium insertion and desorption are possible is limited.

Accordingly, the present invention adjusts the orientation peak area ratio (I110/I004) of the XRD pattern, which indicates the edge crystal direction of the graphite layer, to the range in a specific range of compression density of the negative electrode to solve this problem. The orientation peak area ratio of these XRD patterns can be more easily controlled by further increasing the spheroidization degree through secondary respherical shaping of natural graphite, as described later.

When the orientation peak intensity area ratio (I110/I004) of the XRD pattern is too small at a compressed density of 1.40 g/cc to 1.80 g/cc for the negative electrode for lithium rechargeable batteries, the directionality of the graphite surface edge is limited, which may cause a degradation of the output characteristics due to undesirable Li insertion and desorption. When it is too large, the output characteristics improve, but the productivity may decrease due to increased processing time and decreased production yield. In addition, the initial charging/discharging efficiency may decrease due to an increase the SEI formed on the edge surface of the natural graphite layer.

The spheroidization degree of the natural graphite may be 0.80 or greater, more specifically 0.85 or greater or 0.90 or greater, and 0.94 or less.

In this specification, the spheroidization degree is a numerical expression of the degree to which a particle is close to a spherical shape. It refers to the value obtained by dividing the circumference of a circle having the same area as the particle projection shape through a flow-type particle analysis device by the actual circumference of the particle projection shape. The spheroidization degree can be measured using an analyzer for optical image acquisition (Fluid Imaging Technologies, Flowcam 8100) and analysis S/W (visual spreadsheet).

As natural graphite satisfies the range of the spheroidization degree, the density and orientation of the spherical shape natural graphite particle increase together, so that when it is applied to the negative electrode active material, uniform surface coating becomes possible, and the XRD pattern orientation peak area ratio (I110/I004) of the negative electrode can be adjusted to the above range, so that the output characteristics and expansion characteristics of the battery can be improved. More specifically, if the spheroidization degree is too small, the coating uniformity deteriorates when manufacturing the negative electrode active material, and the adhesive strength of the negative electrode active material and the current collector deteriorates, requiring an increase in the binder content when manufacturing the electrode, or the electrochemical performance, such as the output characteristics and expansion characteristics, may deteriorate. On the other hand, if the spheroidization degree is too large, adhesive strength and coating uniformity may be improved, but productivity may decrease due to increased processing time and decreased production yield.

The spheroidization degree of such natural graphite can be obtained through the primary spherical shaping and secondary re-spherical shaping processes. In other words, the natural graphite can be a re-spherical shaped natural graphite.

Through additional spherical shaping, the spheroidization degree of graphite is increased, and as mentioned above, the area ratio of the orientation peak intensity of the XRD pattern (I110/I004) in a specific range of compression (electrode) density of the negative electrode can be more easily controlled from 0.08 to 0.16, thereby exhibiting improved effects such as increased capacity and output characteristics of the battery.

More specifically, a manufacturing method of respherical shaped natural graphite may include the steps of: preparing natural graphite particles; primarily sphericalizing the natural graphite particles; secondary sphericalizing the primary spherical shaped natural graphite particles; and particle size classifying the secondary respherical shaped natural graphite particles to obtain spherical shaped natural graphite.

The step of first sphericalizing the natural graphite particle may be a general method used in the art to spherically shape plate-shaped natural graphite particles.

The step of secondary re-sphericalizing the primary spherical shaped natural graphite particle may be to further spherically shape the primary spherical shaped natural graphite particle using a mechanical spherical shaping method.

The mechanical spherical shaping method may be at least one selected from the group consisting of Air Classifying milling, Spheronizing milling, Grinding milling, Mechanofusion milling, Planetary milling, Hybridization milling, Shape milling, and High speed milling.

The secondary respherical shaping step can be performed at a rotation speed of 500 to 4,000 rpm, and more specifically, 700 to 2,000 rpm or 800 to 1,500 rpm. As spherical shaping is performed at a rotation speed of the range, cracks and destruction of graphite raw materials can be minimized, and natural graphite with an appropriate spheroidization degree can be formed.

The secondary respherical shaping step can be performed for 5 to 40 minutes, and more specifically for 8 to 25 minutes or 10 to 20 minutes. As spherical shaping is performed over a range of time, natural graphite with an appropriate spheroidization degree can be formed.

The step of obtaining spherical-shaped natural graphite by particle size classification of the secondary re-spherical-shaped natural graphite particles may be to perform particle size classification such that the average particle diameter D50 of the re-spherical-shaped natural graphite is in the range of 8 to 20µm, 10 to 18µm or 13 to 18µm. The classification can remove some particles smaller than 8 µm through airflow classification and some particles larger than 20 µm through sieve classification.

The tap density of natural graphite can be 0.8 to 1.2 g/cm³, and more specifically, 0.9 to 1.1 g/cm³. As the tap density satisfies the range, when pressing at a constant pressure during electrode manufacturing, deformation is minimized, which can suppress expansion due to charging/discharging.

The average particle diameter D50 of natural graphite can be 6 to 20 µm, and more specifically 8 to 18 µm or 12 to 18 µm.

In this specification, the average particle diameter D50 can be defined as the particle diameter corresponding to 50% of the volume accumulation amount on the particle diameter distribution curved line. The average particle diameter D50 can be measured, for example, using the laser diffraction method. The laser diffraction method can generally measure particle diameters from the submicron region to several millimeters, and can obtain highly reproducible and highly degradable results.

Since the average particle diameter D50 of natural graphite satisfies the range, stable electrode slurry can be manufactured during electrode manufacturing, and a uniform particle size distribution can be formed to improve rapid charge/discharge performance.

A negative electrode for a lithium rechargeable battery according to one embodiment of the present invention includes a coating layer.

At this time, the coating layer may include a low-crystalline carbon material. By forming a low-crystalline carbon material coating layer, the side reaction of natural graphite with electrolytes is suppressed, which reduces non-reversible reactions and improves electrochemical characteristics.

The low-crystalline carbon material can be petroleum pitch, coal pitch, mesophase pitch, heavy oil, light oil, polyvinyl alcohol (PVA), polyvinylchloride (PVC), sucrose, phenol resin, furan resin, furfuryl alcohol, polyacrylonitrile, cellulose, styrene, polyimide, epoxy resin, glucose or combination thereof.

The content of the low-crystalline carbon material can be 1 to 20 wt% with reference to the entire weight of the natural graphite, and more specifically, 2 to 16 wt%, 3 to 12 wt%, or 4 to 10 wt%. As the content of low-crystalline carbon material satisfies the range, natural graphite and low-crystalline carbon material can be effectively bonded, and the output and life-span characteristics of lithium rechargeable battery can be improved by reducing the side reaction and improving the lithium ion conductivity.

The thickness of the coating layer can be 5 to 20 nm. If the thickness of the coating layer is too small, there is an advantage of reduced resistance when lithium ions are inserted/de-inserted into the graphite, but it is impossible to secure coating uniformity, and problems such as increased side reactions due to non-uniform coating may occur. In addition, if the thickness of the coating layer is too large, it is difficult to insert and de-inserte lithium ions, which may cause problems such as increased negative electrode resistance and reduced life-span.

The spheroidization degree of the negative electrode active material may be 0.8 or greater, more specifically 0.85 or greater or 0.90 or greater, and 0.94 or less. The advantage of spherical shaping satisfying the range is the same as the explanation for the spheroidization degree of natural graphite mentioned above.

The specific surface area of the negative electrode active material can be 1.5 to 3.5 m²/g, and more specifically, 1.7 to 3.0 m²/g. **If** the specific surface area of the negative electrode active material is too small, the surface coating material may be excessive, which may cause a life-span deterioration problem due to an increase in the resistance of the negative electrode material, or if the graphite layer edge crystal directionality is single-directional, lithium insertion and desorption may be limited, resulting in a degradation of the output characteristics. On the other hand, if the specific surface area of the negative electrode active material is too large, battery life-span deterioration problems may occur due to excessive SEI formation and side reaction at the edge of the surface graphite layer.

Another embodiment of the present invention provides a method for manufacturing a negative electrode active material for a lithium rechargeable battery, including the steps of preparing natural graphite; forming a mixture by mixing the natural graphite and a coating raw material; and forming a negative electrode active material for a lithium rechargeable battery by heat treating the mixture.

First, prepare natural graphite.

The spheroidization degree, tap density, and average particle diameter D50 of natural graphite are described above and therefore are omitted.

Additionally, at this time, the natural graphite may be respherical shaped natural graphite with a higher spheroidization degree through secondary respherical shaping as described above. At this time, the secondary respherical shaping method is omitted as it is the same as described above.

Next, the natural graphite and coating raw materials are mixed to form a mixture.

At this time, the coating raw material may include low-crystalline carbon material. The advantages of including low-crystalline carbon materials are as described above, so they are omitted.

The low-crystalline carbon material can be petroleum pitch, coal pitch, mesophase pitch, heavy oil, light oil, polyvinyl alcohol (PVA), polyvinylchloride (PVC), sucrose, phenol resin, furan resin, furfuryl alcohol, polyacrylonitrile, cellulose, styrene, polyimide, epoxy resin, glucose or combination thereof.

The mixing can be performed by mechanical mixing method.

The mechanical mixing method can be ball milling, mechanofusion milling, shaker milling, planetary milling, attritor milling, shape milling, nauta milling, nobilta milling, high speed mixing, paddle mixing, ribbon mixing, henschel mixing, corn type mixing, thinky mixing or homo mixing method.

The mixing can be performed at a rotation speed of 500 to 3,000 rpm, more specifically at a rotation speed of 1,000 to 3,000 rpm or 1,500 to 2,500 rpm.

The mixing can be performed for 2 minutes to 1 hour, or more specifically for 2 minutes to 30 minutes or 5 minutes to 20 minutes.

Next, the mixture is heat treated to form a negative electrode active material for a lithium rechargeable battery.

The heat treatment can be performed at 600 to 1,500°C, and more specifically at 700 to 1,400°C, 800 to 1,400°C or 900 to 1,400°C.

The heat treatment can be performed in an atmosphere of hydrogen, nitrogen, argon or their mixed gases.

The heat treatment can be performed for 2 to 15 hours, more specifically for 3 to 10 hours or 4 to 8 hours.

A negative electrode for a lithium rechargeable battery according to one embodiment of the present invention may include a negative electrode current collector; and a negative electrode active material layer positioned on the negative electrode current collector, the negative electrode active material for the lithium rechargeable battery being included.

The negative electrode current collector is not particularly limited as long as it has high conductivity and does not cause chemical changes in the battery, and for example, copper, stainless steel, aluminum, nickel, titanium, sintered carbon, copper or stainless-steel surface-treated with carbon, nickel, titanium, silver, etc., aluminum-cadmium alloy, etc. can be used. Additionally, the negative electrode current collector can typically have a thickness of 3 to 500 µm, and, like the positive electrode current collector, can form fine protrusions and depressions on the current collector surface to enhance the bonding strength of the negative electrode active material. For example, it can be used in various forms such as film, sheet, foil, net, porous body, foam, and non-woven fabric.

The negative electrode active material layer may include a selectively binder and/or conductive material together with the negative electrode active material.

The binder serves to improve the adhesion between negative electrode active material particles and the adhesive strength between the negative electrode active material and the negative electrode current collector. Specific examples include polyvinylidene fluoride (PVDF), vinylidenefluoride-hexafluoropropylene copolymer (PVDF-co-HFP), polyvinylalcohol, polyacrylonitrile, carboxylmethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluorine rubber, or various copolymers thereof, and one of these may be used alone or a mixture of two or more thereof. The binder can be included in an amount of 1 to 30 wt% based on the total weight of the negative electrode active material layer.

The conductive material is used to provide conductivity to the electrode, and can be used without special restrictions in the battery as long as it does not cause chemical changes and has electron conductivity. Specific examples include graphite such as natural graphite or artificial graphite; carbon-based materials such as carbon black, acetylene black, Ketjen black, channel black, furnace black, lamp black, summer black, and carbon fiber; metal powder or metal fiber such as copper, nickel, aluminum, and silver; conductive whiskers such as zinc oxide, and potassium titanate; conductive metal oxides such as titanium dioxide; or conductive polymers such as polyphenylene derivatives, and among these, one alone or a mixture of two or more can be used. The conductive material can typically be included in an amount of 1 to 30 wt% with respect to the total weight of the negative electrode active material layer.

A negative electrode for a lithium rechargeable battery according to one embodiment of the present invention can be manufactured according to a conventional negative electrode manufacturing method, except that the negative electrode active material described above is used.

Specifically, it can be manufactured by applying a composition for forming a negative electrode active material layer including the aforementioned negative electrode active material and selectively a binder, a conductive material, and a solvent onto a negative electrode current collector, followed by drying and rolling. At this time, the types and contents of the negative electrode active material, binder, and conductive material are as described above.

The solvent may be a generally-used solvent in the relevant technical field, such as dimethylsulfoxide (DMSO), isopropyl alcohol, N-methylpyrrolidone (NMP), acetone, or water. One of these may be used alone or a mixture of two or more may be used. The amount of the solvent used is sufficient to dissolve or disperse the negative electrode active material, conductive material, and binder, taking into consideration the coating thickness and manufacturing yield of the slurry, and to have a viscosity that can exhibit excellent thickness uniformity during subsequent coating for manufacturing the negative electrode.

Alternatively, the negative electrode can be manufactured by casting the composition for forming the negative electrode active material layer onto a separate supporter, peeling the resulting film from the supporter, and laminating the resulting film onto a negative electrode current collector.

### 2. Lithium rechargeable battery

Another embodiment of the present invention provides a lithium rechargeable battery comprising a negative electrode for the aforementioned lithium rechargeable battery.

The lithium rechargeable battery may more specifically include a positive electrode, a negative electrode positioned opposite the positive electrode, a separator interposed between the positive electrode and the negative electrode, and an electrolyte.

The negative electrode is as described above.

Additionally, the lithium rechargeable battery may further selectively include a battery container that accommodates an electrode assembly of a positive electrode, a negative electrode, a separator, and a sealing member that seals the battery container.

The positive electrode may include a positive electrode current collector and a positive electrode active material layer disposed on the positive electrode current collector, and the positive electrode active material layer may include a positive electrode active material.

The positive electrode current collector is not particularly limited as long as it has conductivity and does not cause chemical changes in the battery, and for example, stainless steel, aluminum, nickel, titanium, sintered (or calcined) carbon or aluminum, or stainless-steel surface treated with carbon, nickel, titanium, silver, etc., can be used. Additionally, the positive electrode current collector can typically have a thickness of 3 to 500 µm, and fine protrusions and depressions can be formed on the positive electrode current collector surface to increase the adhesive strength of the positive electrode active material. It can be used in various forms such as film, sheet, foil, net, porous body, foam, non-woven fabric, etc.

A compound that can reversibly intercalate and deintercalate lithium (lithiated intercalation compound) can be used as the positive electrode active material. Specifically, at least one of a composite oxide of a metal selected from cobalt, manganese, nickel, and a combination thereof and lithium may be used, and as a specific example, a compound expressed by one of the following formulas may be used:
LiₐA_{1-b}R_{b}D₂ (where 0.90 ≤ a ≤ 1.8 and 0 ≤ b ≤ 0.5); LiₐE_{1-b}R_{b}O_{2-c}D_{c} (where 0.90 ≤ a ≤ 1.8, 0 ≤ b ≤ 0.5, and 0 ≤ c ≤ 0.05); LiE_{2-b}R_{b}O_{4-c}D_{c} (where 0 ≤ b ≤ 0.5 and 0 ≤ c ≤ 0.05); LiₐNi_{1-b-c}Co_{b}R_{c}D_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}R_{c}O_{2-α}Z_{α} (where 0.90 ≤ a ≤ 1.8, 0 ≤ b ≤ 0.5, 0 ≤ c ≤ 0.05, and 0 < α < 2); LiₐNi_{1-b-c}Co_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}D_{α} (where 0.90 ≤ a ≤ 1.8, 0 ≤ b ≤ 0.5, 0 ≤ c ≤ 0.05, and 0 < α ≤ 2); LiₐNi_{1-b-c}Mn_{b}R_{c}O_{2-α}Z_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{b}E_{c}G_{d}O₂ (where 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂ (where 0.90 ≤ a ≤ 1.8, 0 ≤ b ≤ 0.9, 0 ≤ c ≤ 0.5, 0 ≤ d ≤0.5, and 0.001 ≤ e ≤ 0.1); LiₐNiG_{b}O₂ (where 0.90 ≤ a ≤ 1.8 and 0.001 ≤ b ≤ 0.1); LiₐCoG_{b}O₂ (where 0.90 ≤ a ≤ 1.8 and 0.001 ≤ b ≤ 0.1); LiₐMnG_{b}O₂ (where 0.90 ≤ a ≤ 1.8 and 0.001 ≤ b ≤ 0.1); LiₐMn₂G_{b}O₄ (where 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li _{(3-f)}J₂ PO₄₃ (0 ≤ f ≤ 2); Li _{(3-f)}Fe₂ PO₄₃ (0 ≤ f ≤ 2); and LiFePO₄.

In the above formula, A is Ni, Co, Mn, or a combination thereof; R is Al, Ni, Co, Mn, Cr, Fe, Mg, Sr, V, a rare earth element, or a combination thereof; D is O, F, S, P, or combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

Of course, it is also possible to use a compound having a coating layer on the compound surface or a mixture of the compound and a compound having a coating layer.

The coating layer may include at least one coating element compound selected from the group consisting of an oxide of the coating element, a hydroxide of the coating element, an oxyhydroxide of the coating element, an oxycarbonate of the coating element and a hydroxycarbonate of the coating element. The compounds forming these coating layers can be amorphous or crystalline. The coating elements included in the coating layer may include Mg, Al, Co, K, Na, Ca, Si, Ti, V, Sn, Ge, Ga, B, As, Zr or a mixture thereof. The coating layer forming process can be performed by any coating method (e.g., spray coating, immersion method, etc.) that does not adversely affect the properties of the positive electrode active material by using these elements in the compound. Since this is well-understood by those working in the field, a detailed explanation will be omitted.

The positive electrode active material layer may further include a binder and/or conductive material together with the aforementioned positive electrode active material.

The binder serves to improve the adhesion between positive electrode active material particles and the adhesive strength between the positive electrode active material and the positive electrode current collector. Specific examples include polyvinylidene fluoride (PVDF), vinylidenefluoride-hexafluoropropylene copolymer (PVDF-co-HFP), polyvinylalcohol, polyacrylonitrile, carboxylmethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluorine rubber, or various copolymers thereof, and one of these may be used alone or a mixture of two or more thereof, but is not limited thereto. The binder can be included in an amount of 1 to 30 wt% based on the total weight of the positive electrode active material layer.

The conductive material is used to provide conductivity to the electrode, and can be used without special restrictions in the battery as long as it does not cause chemical changes and has electron conductivity. Specific examples include graphite such as natural graphite or artificial graphite; carbon-based materials such as carbon black, acetylene black, Ketjen black, channel black, furnace black, lamp black, summer black, and carbon fiber; metal powder or metal fiber such as copper, nickel, aluminum, and silver; conductive whiskers such as zinc oxide, and potassium titanate; conductive metal oxides such as titanium dioxide; or conductive polymers such as polyphenylene derivatives, and among these, one alone or a mixture of two or more can be used, but is not limited thereto. The conductive material can typically be included in an amount of 1 to 30 wt% based on the total weight of the positive electrode active material layer.

The positive electrode can be manufactured according to a conventional anode manufacturing method.

Specifically, the positive electrode can be manufactured by applying a composition for forming a positive electrode active material layer, which includes a positive electrode active material and, optionally, a binder, a conductive material or a solvent, on an positive electrode current collector, followed by drying and rolling. At this time, the types and contents of the positive electrode active material, binder, and conductive material are as described above.

The solvent may be a generally-used solvent in the relevant technical field, such as dimethylsulfoxide (DMSO), isopropyl alcohol, N-methylpyrrolidone (NMP), acetone, or water. One of these may be used alone or a mixture of two or more may be used. The amount of the solvent used is sufficient to dissolve or disperse the positive electrode active material, conductive material, and binder, taking into consideration the coating thickness and manufacturing yield of the slurry, and to have a viscosity that can exhibit excellent thickness uniformity during subsequent coating for manufacturing the positive electrode.

Alternatively, the positive electrode can be manufactured by casting the composition for forming the positive electrode active material layer onto a separate supporter, peeling the resulting film from the supporter, and laminating the resulting film onto a positive electrode current collector.

The separator separates the positive and negative electrodes and provides a passage for lithium ions to move. If it is a separator that is usually used in lithium rechargeable batteries, it can be used without any special restrictions. It is preferably one that has low resistance to ion movement of the electrolyte and excellent electrolyte wettability. Specifically, a porous polymer film, for example, a porous polymer film manufactured from a polyolefin polymer such as an ethylene homopolymer, a propylene homopolymer, an ethylene/butene copolymer, an ethylene/hexene copolymer, and an ethylene/methacrylate copolymer, or a stacking structure of two or more layers thereof can be used. Additionally, conventional porous non-woven fabrics, such as non-woven fabrics made of high melting point glass fibers, polyethylene terephthalate fibers, etc., may also be used. In addition, a coated separator containing a ceramic component or polymer material may be used to secure heat resistance or mechanical strength, and may be selectively used as a single-layer or multi-layer structure.

The electrolytes that can be used in the manufacture of lithium rechargeable batteries include organic liquid electrolytes, inorganic liquid electrolytes, solid polymer electrolytes, gel-type polymer electrolytes, solid inorganic electrolytes, and molten-type inorganic electrolytes, but are not limited thereto.

Specifically, the organic liquid electrolyte may include an organic solvent and a lithium salt.

Any organic solvent that can act as a medium through which ions involved in the electrochemical reaction of the battery can move can be used without any special restrictions. Specifically, the organic solvent includes ester-based solvents such as methyl acetate, ethyl acetate, γ-butyrolactone, and ε-caprolactone; Ether-based solvents such as dibutyl ether or tetrahydrofuran; Ketone-based solvents such as cyclohexanone; Aromatic hydrocarbon solvents such as benzene and fluorobenzene; Carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); Alcohol-based solvents such as ethanol and isopropyl alcohol; Nitriles such as R-CN (R is a hydrocarbon group with a linear, branched or cyclic structure of C2 to C20, and may include a double bond aromatic ring or ether bond); amides such as dimethyl formamide; dioxolanes such as 1,3-dioxolane; or sulfolanes, etc. can be used. Among these, a carbonate solvent is preferable, and a mixture of a cyclic carbonate (e.g., ethylenecarbonate or propylenecarbonate, etc.) with high ionic conductivity and high dielectric constant that can improve the charging and discharging performance of the battery; and a low-viscosity linear carbonate compound (e.g., ethylmethylcarbonate, dimethylcarbonate or diethylcarbonate, etc.); is more preferable. In this case, cyclic carbonate and linear carbonate can be mixed and used in a volume ratio of about 1:1 to about 1:9 to achieve excellent electrolyte performance.

The lithium salt can be used without any special restrictions as long as it is a compound that can provide lithium ions used in a lithium rechargeable battery. Specifically, the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, Lil, or LiB(C₂O₄)₂ may be used. It is recommended to use the lithium salt concentration within the range of 0.1 to 2.0 M. When the concentration of lithium salt is within the range, the electrolyte can exhibit excellent electrolyte performance because it has appropriate conductivity and viscosity, and lithium ions can move effectively.

In addition to the electrolyte components, the electrolyte may further contain one or more additives, such as haloalkylenecarbonate compounds such as difluoro ethylenecarbonate, pyridine, triethylphosphite, triethanolamine, cyclic ether, ethylene diamine, n-glyme, hexaphosphate triamide, nitrobenzene derivative, sulfur, quinone imine dye, N-substituted oxazoleridinone, N,N-substituted imidazoleridine, ethylene glycol dialkyl ether, ammonium salts, pyrrole, 2-methoxy ethanol or trichloro-aluminum, for the purpose of improving the life-span characteristics of the battery, suppressing battery capacity decrease, and improving the discharge capacity of the battery. At this time, the additive can be included in an amount of 0.1 to 5 wt% relative to the total weight of the electrolyte.

Below, an implementation example of the present invention is described in more detail through embodiment. However, the embodiment below is only a preferable embodiment of the present invention, and the present invention is not limited by the embodiment below.

### Embodiment 1

### (1) Preparation of spherical shape natural graphite

The primary spherical shaped natural graphite particles with an average particle diameter D50 of 16 µm were subjected to secondary mechanical spherical shaping treatment in a spheronizer at 1,000 rpm for 15 minutes, followed by air classification and sieving to remove fine and coarse particles, thereby producing high density re-spherical shaped natural graphite particles with an average particle diameter of 15 µm.

### (2) Preparation of negative electrode active material

The high density spherical shaped natural graphite particles with an average particle diameter of 15 µm and a secondary spherical shape manufactured by the method were mixed with petroleum pitch at a weight ratio of 100:8, and then mechanically mixed in a high-speed stirrer at 2,000 rpm for 10 minutes to prepare a uniform mixture.

The manufactured sample was placed in a container and heat treated at 1,200°C in a nitrogen atmosphere for 5 hours, then classified through a 75 µm sieve to manufacture a negative electrode active material.

### (3) Preparation of negative electrode

The manufactured negative electrode active material and conductive material, styrene butadiene rubber (SBR) as a binder, and carboxylmethyl cellulose (CMC) as a thickener were mixed at a mass ratio of 96:1:1.5:1.5, and then dispersed in distilled water from which ions had been removed to manufacture a negative electrode active material layer composition. After the composition was applied to a Cu foil current collector, it was dried and rolled to manufacture a negative electrode having an electrode density of 1.40±0.05 and 1.80±0.05 g/cm³.

### (4) Preparation of lithium rechargeable battery

A coin-type 2032 half-battery was manufactured using the negative electrode as the operating electrode and lithium metal as the counter electrode. At this time, a separator made of porous polypropylene film was inserted between the working electrode and the counter electrode, and as an electrolyte, 1M concentration of LiPF₆ dissolved in a mixed solution of diethylcarbonate (DEC) and ethylenecarbonate (EC) with a volume ratio of 7:3 was used.

### Embodiment 2

A spherical shape natural graphite, a negative electrode active material, a negative electrode, and a lithium rechargeable battery were manufactured in the same manner as in embodiment 1, except that high-density spherical shape natural graphite particles having an average particle diameter D50 of 16 µm were used as a base material.

### Comparative Example 1

A spherical shape natural graphite, a negative electrode active material, a negative electrode, and a lithium rechargeable battery were manufactured in the same manner as in embodiment 1, except that the primary spherical shaped natural graphite without additional spherical shaping, having an average particle diameter D50 of 16 µm, was used.

### Comparative Example 2

A spherical shape natural graphite, a negative electrode active material, a negative electrode, and a lithium rechargeable battery were manufactured in the same manner as in embodiment 1, except that the primary spherical shaped natural graphite without additional spherical shaping, having an average particle diameter D50 of 17 µm, was used.

### Experimental Example 1: Evaluation of spheroidization degree

The spheroidization degree of spherical shape natural graphite manufactured according to embodiment 1 to 2 and comparative example 1 to 2 was evaluated, and the results are shown in Table 1 below.

Specifically, the spheroidization degree of a spherical shape natural graphite powder was evaluated by dividing the circumference of a circle having the same area as the particle projection shape by the actual circumference of the particle projection shape using a flow particle analysis device. The spheroidization degree can be measured using an analyzer for optical image acquisition (Fluid Imaging Technologies, Flowcam 8100) and analysis S/W (visual spreadsheet).

**(Table 1)**

| | Spheroidization degree |
|---|---|
| embodiment 1 | 0.92 |
| embodiment 2 | 0.91 |
| Comparative Example 1 | 0.88 |
| Comparative Example 2 | 0.87 |

Experimental Example 2: Evaluation of the orientation peak intensity area ratio (I110/I004) of the negative electrode XRD pattern

The orientation peak intensity area ratio (I110/I004) of the XRD pattern of the negative electrode for a lithium rechargeable battery manufactured according to Embodiment 1 to 2 and Comparative Example 1 to 2 was evaluated at a compressed density of 1.40 g/cc and a compressed density of 1.80 g/cc, and the results are shown in Table 2 and FIG. 2 below.

Specifically, XRD diffraction measurements using Cu (Kα-ray) were performed on the negative electrodes manufactured according to embodiments 1 to 2 and Comparative Examples 1 to 2. The orientation index was calculated by integrating the peak intensities of the (110) and (004) planes of the spherical shape natural graphite included in the negative electrode after measuring the (110) and (004) planes using XRD, and then calculating the area ratio ((110)/(004)). More specifically, the XRD measurement conditions are as follows.
- Target: Cu(Kα-ray) graphite monochromator
- Slit: Diverging slit = 1 degree, Receiving slit = 0.1mm, Scatter slit = 1 degree
- Measurement area and step angle/measurement time:
   (110) plane: 76.5 degrees < 2θ < 78.5 degrees, 0.1 degrees / 4.2 seconds
   (004) plane: 53.5 degrees < 2θ < 56.0 degrees, 0.1 degrees / 4.2 seconds, where 2θ represents the diffraction angle.

**(Table 2)**

| Type | Intensity area ratio of orientation peaks ((I110)/(I004)) | |
|---|---|---|
| | 1.40g/cc | 1.80g/cc |
| embodiment 1 | 0.144 | 0.086 |
| embodiment 2 | 0.119 | 0.083 |
| Comparativ e Example 1 | 0.059 | 0.040 |
| Comparativ e Example 2 | 0.046 | 0.037 |

As shown in Table 2 and referring to FIG. 2, the negative electrodes according to embodiments 1 to 2 had a sufficiently large area ratio of orientation peak intensity ((1110)/(1004)) within the range of 0.08 to 0.16 at a compressed density of 1.40 g/cc to 1.80 g/cc, whereas the negative electrodes according to comparative examples 1 to 2 had a small area ratio of orientation peak intensity ((1110)/(1004)) of 0.06 or less.

Experimental Example 3: Evaluation of lithium rechargeable battery charge output characteristic

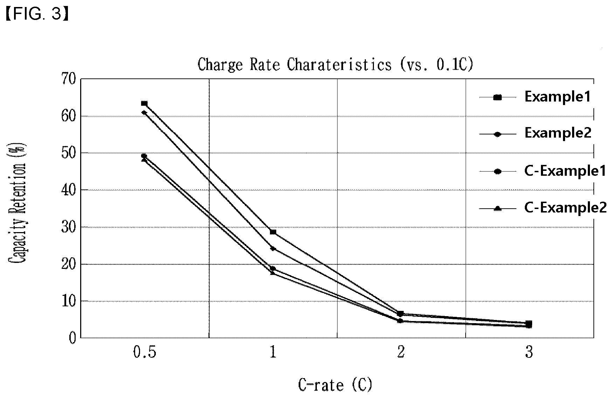

A high-rate characteristic evaluation experiment was conducted on a lithium rechargeable battery manufactured according to Embodiments 1 to 2 and Comparative Examples 1 to 2, and the results are shown in Table 3 and FIG. 3 below.

Specifically, a coin-type lithium rechargeable battery was charged to 5 mV/0.005 C at 0.5 C, 1.0 C, and 2.0 C under constant current/constant voltage (CC/CV) conditions at 25°C using a negative electrode manufactured according to Embodiments 1 to 2 and Comparative Examples 1 to 2, and then discharged to 1.2 V at 0.1 C under constant current (CC) conditions, and the capacity charged at constant current for each C-rate was measured.

**(Table 3)**

| Type | Charge output characteristic | | |
|---|---|---|---|
| | 0.5C(%) | 1.0C(%) | 2.0C(%) |
| embodiment 1 | 63.3 | 28.7 | 6.6 |
| embodiment 2 | 60.9 | 24.3 | 6.3 |
| Comparativ e Example 1 | 49.1 | 18.8 | 4.7 |
| Comparativ e Example 2 | 48.1 | 17.5 | 4.6 |

Referring to Table 3 and FIG. 3, in Examples 1 and 2, which exhibit an orientation peak area ratio (I110/I004) of the XRD pattern in the range of 0.08 to 0.16 at a compaction density of 1.40 g/cc to 1.80 g/cc, the constant current (CC) charge capacities at 0.5C and 1.0C were observed to be approximately 60% and 24% or higher, respectively, indicating excellent charge rate characteristics. In contrast, Comparative Examples 1 and 2, which fall outside the above range, exhibited charge capacities of less than approximately 50% and 19%, respectively, confirming a significant deterioration in charge rate performance.

Although the present invention has been described above with regard to a preferably embodiment thereof, the present invention is not limited thereto, and it is possible to implement the present invention by modifying it in various ways within the scope of the patent claims and the detailed description and accompanying drawings of the invention, and this also naturally falls within the scope of the present invention.

Therefore, it can be said that the actual scope of the present invention is defined by the attached patent claims and their equivalents.

## Claims

1. A negative electrode for a lithium rechargeable battery, comprises:
a negative electrode active material comprising a natural graphite and a coating layer disposed on the surface of the natural graphite,
wherein, an area ratio of the orientation peak intensity of the XRD pattern (I110/I004) is 0.08 to 0.16 at a compressed density of 1.40 g/cc to 1.80 g/cc.

2. The negative electrode of claim 1, wherein:
a spheroidization degree of the natural graphite is greater than 0.80.

3. The negative electrode of claim 1, wherein:
the natural graphite is a respherical shaped natural graphite obtained through the primary spherical shaping and secondary respherical shaping processes.

4. The negative electrode of claim 1, wherein:
a tap density of the natural graphite is 0.8 to 1.2 g/cm³.

5. **The** negative electrode of claim 1, wherein:
an average particle diameter D50 of the natural graphite is 6 to 20µm.

6. **The** negative electrode of claim 1, wherein:
the coating layer comprises a low-crystalline carbon material.

7. **The** negative electrode of claim 6, wherein:
the low-crystalline carbon material is petroleum pitch, coal pitch, mesophase pitch, heavy oil, light oil, polyvinyl alcohol (PVA), polyvinylchloride (PVC), sucrose, phenol resin, furan resin, furfuryl alcohol, polyacrylonitrile, cellulose, styrene, polyimide, epoxy resin, glucose or combination thereof.

8. The negative electrode of claim 6, wherein:
a content of the low-crystalline carbon material is 1 to 20 wt% with the entire weight of the natural graphite as a reference.

9. The negative electrode of claim 1, wherein:
a thickness of the coating layer is 5 to 20 nm.

10. The negative electrode of claim 1, wherein:
a spheroidization degree of the negative electrode active material is 0.8 or higher.

11. The negative electrode of claim 1, wherein:
a specific surface area of the negative electrode active material is 1.5 to 4.0 m²/g.

12. A lithium rechargeable battery, comprises:
a negative electrode for a lithium rechargeable battery according to claim 1.
